# DEMANDE DE BREVET EUROPEEN

(11) **EP 2 229 019 A1**
(43) Date de publication de la demande: **15.09.2010**
(21) Numéro de dépôt: 09305223.1
(22) Date de dépôt: 11.03.2009
(51) Int. Cl.: H04W 12/12

(54) **Procédé pour éviter un usage malintentionné d'une carte SIM insérée dans un dispositif M2M et dispositif M2M**

(71) Demandeur: Gemalto SA, 92190 Meudon (FR)
(72) Inventeur: Thill, Michel, 92197 Meudon Cedex (FR); Barbe, Serge, 92197 Meudon Cedex (FR)

(57) **Abrégé**

L'invention concerne un dispositif M2M comprenant une unité de communication et une carte SIM, ladite carte SIM comprenant un contrôleur ou microcontrôleur (A), **caractérisé en ce que** la carte SIM comprend au moins un capteur (B ; C), ledit au moins un capteur étant un capteur sélectionné parmi le groupe consistant en un capteur de température, un capteur de contrainte, un capteur de mouvement, un capteur de déplacement, un capteur inertiel ou d'accélération, un capteur de son, capteur de pression, un capteur de choc et un capteur de vibration, ledit contrôleur, ou microcontrôleur, (A) comprenant un élément de désactivation au moins partielle de ses fonctions suite à la réception en provenance dudit au moins un capteur (B,C) d'au moins un signal indicatif d'une valeur d'état d'environnement hors d'une plage prédéterminée, évitant ainsi un usage malintentionné de ladite carte SIM.

## Description

La présente invention a trait de manière générale à une carte SIM pour applications M2M et un dispositif M2M.

En français, la terminologie « M2M » désigne de manière commune « communication de machine à machine ». La technologie M2M est destinée par exemple à permettre aux machines, unités industrielles, véhicules, dispositifs ou plus généralement à tout équipement, quel qu'il soit, de communiquer avec tout autre machine, unité industrielle, véhicule, dispositif, serveur ou plus généralement à tout équipement distant, et cela sans intervention humaine, par exemple pour des applications de télésurveillance, télémétrie, alerte, gestion de flottes de véhicules, assistance à la personne, etc......

Grâce a l'essor des technologies de communication sans fil (GSM, GPRS, EDGE, Wi-Fi...), le M2M s'impose aujourd'hui comme une solution extrêmement performante et compétitive par exemple pour la gestion de parcs de machines distantes : la ou une intervention sur le terrain était incontournable pour surveiller, contrôler ou assurer la maintenance de machines reparties en divers endroits, la connectivite réseau intégré et les technologies web permettent une gestion centralisée a distance de ces mêmes machines.

Dans le cadre de l'utilisation de réseau(x) de télécommunications sans fil de type par exemple GSM, GPRS, le dispositif M2M utilisé comprend typiquement une unité de communication (comprenant elle-même des moyens de traitement de signal en bande de base et en radiofréquence) et une carte SIM.

Conventionnellement, dans un terminal de communication sans fil GSM par exemple, la carte SIM est un élément externe et amovible par rapport au terminal de communication auquel elle est associée. Elle a en effet pour objectif d'identifier un « abonné », qui peut être conduit à changer de terminal sans vouloir changer son identifiant associé à la carte SIM. La carte est disposée dans un logement prévu dans le dispositif de communication et est introduite dans ce logement par glissement dans une fente ou ouverture prévue à cet effet. Elle peut être changée physiquement durant la durée de vie du dispositif de communication, par exemple afin d'obtenir plus de fonctionnalités ou pour changer d'opérateur.

Pendant la production des cartes SIM, dans une phase appelée personnalisation de la carte SIM, le fabricant de cartes SIM procède à la mise en place dans la carte SIM des fonctions demandées par l'opérateur ainsi qu'au stockage des paramètres de l'opérateur (par exemple des clés secrètes, des algorithmes de cryptage,...).

Dans le cadre d'applications M2M, les unités de communication sont souvent enfouies dans des équipements et donc difficilement accessibles.

Les dispositifs M2M sont des dispositifs qui peuvent être sans surveillance humaine particulière puisqu'intégrés dans des équipements ou machines hors de toute présence humaine, et sont donc susceptibles de subir des dégradations ayant pour but de voler la carte SIM, avec comme objectif de pouvoir réutiliser frauduleusement l'abonnement téléphonie mobile qui y est associé.

La présente invention vise à remédier à ces inconvénients de la technique antérieure.

A cette fin, un dispositif M2M selon l'invention comprenant une unité de communication et une carte SIM, ladite carte SIM comprenant un contrôleur ou microcontrôleur, est caractérisée en ce qu'il comprend au moins un capteur, ledit au moins un capteur étant un capteur sélectionné parmi le groupe consistant en un capteur de température, un capteur de contrainte, un capteur de mouvement, un capteur de déplacement, un capteur inertiel ou d'accélération, un capteur de son, capteur de pression, un capteur de choc et un capteur de vibration, ledit contrôleur, ou microcontrôleur, comprenant un élément de désactivation au moins partielle de ses fonctions suite à la réception en provenance dudit au moins un capteur d'au moins un signal indicatif d'une valeur d'état d'environnement hors d'une plage prédéterminée, évitant ainsi un usage malintentionné de ladite carte SIM dudit.

L'invention fournit également un procédé pour éviter un usage malintentionné d'une carte SIM insérée dans un dispositif M2M par extraction préalable de ladite carte dudit dispositif M2M, ladite carte SIM comprenant un contrôleur ou microcontrôleur. Le procédé se caractérise en ce qu'il comprend - l'utilisation d'au moins un capteur dans la carte SIM, ledit au moins un capteur étant un capteur sélectionné parmi le groupe consistant en un capteur de température, un capteur de contrainte, un capteur de mouvement, un capteur de déplacement, un capteur inertiel ou d'accélération, un capteur de son, capteur de pression, un capteur de choc et un capteur de vibration, ledit contrôleur, ou microcontrôleur, - la mesure par ledit capteur de valeurs d'état d'environnement, et - la désactivation au moins partielle des fonctions dudit contrôleur suite à la réception en provenance dudit au moins un capteur d'au moins un signal indicatif d'une valeur d'état d'environnement hors d'une plage prédéterminée, évitant ainsi un usage malintentionné de ladite carte SIM.

Ainsi, selon l'invention, on se propose de combiner dans la carte SIM un contrôleur conventionnel avec un capteur, tel que capteur de son, de pression, de déplacement, de choc, de température, de mouvement ou un accéléromètre. On utilise au moins un capteur en fonction de l'environnement dans lequel est utilisé le dispositif M2M, afin de détecter une très probable tentative malintentionnée de dégradations de l'équipement M2M et/ou vol de la carte SIM. L'élément de désactivation peut être logiciel ou hardware. Il est mis en oeuvre dans le contrôleur, ou microcontrôleur, en réponse ou bien (1) - à un signal d'alerte émis par le capteur, le capteur effectuant alors lui-même le traitement nécessaire à la détection d'une alerte à partir d'une mesure d'état d'environnement (l'état d'environnement pouvant être la température, le niveau sonore, un mouvement, etc...), ou bien (b) - suite à un traitement, dans le contrôleur (ou microcontrôleur), de signal de mesure d'état d'environnement reçu du capteur. Dans tous les cas, l'élément de désactivation au moins partielle des fonctions du contrôleur, ou microcontrôleur, est mis en oeuvre suite à la réception en provenance du capteur d'un signal indicatif d'une valeur d'état d'environnement hors d'une plage prédéterminée. Un état d'environnement peut être une pression, une contrainte ou un niveau sonore mesuré par le capteur. Si un signal de mesure par le capteur de cet état d'environnement est par exemple supérieur à un seuil, alors il « provoque » la désactivation au moins partielle des fonctions du contrôleur.

La carte SIM peut inclure également un moyen pour déclencher l'envoi d'un message d'alerte, dit « alerte », à destination d'un serveur gérant le parc M2M (type appel d'urgence) lors de la réception en provenance du capteur d'un premier signal indicatif d'une valeur d'état d'environnement hors d'une plage prédéterminée.

Ce serveur peut être utilisé pour interroger la carte SIM en cas d'alerte et vérifier la gravité de cette alerte, par exemple vérifier que le dispositif M2M (comprenant l'unité de communication et la carte SIM) fonctionnent correctement. A cette fin, par exemple, il peut être prévu d'analyser si les causes ayant déclenché l'alerte ont disparu ou se reproduisent.

Avantageusement, la carte SIM pourra être munie d'au moins un circuit destiné à vérifier que l'objet SIM n'a pas été déplacé et donc détourné de son usage M2M initial, tel que par exemple :
1 - Pour des systèmes M2M inamovibles (compteurs, distributeurs..) :
   - Un capteur de pression atmosphérique, permettant de détecter des variations rapides de pression ;
   - Un accéléromètre pour détecter des déplacements ou des changements de position.
2 - Pour des systèmes M2M mobiles (automobiles..) :
   - Un circuit de génération de signature de signal à l'interface ISO entre la carte SIM et le circuit de communication du dispositif M2M, signature caractérisée par la forme et l'amplitude des signaux que génère le circuit de communication pour dialoguer avec la carte SIM.

D'autres caractéristiques et avantages de la présente invention apparaîtront plus clairement à la lecture de la description qui suit en relation avec les dessins annexés correspondants dans lesquels :
- La Figure 1 est une représentation en coupe partielle d'un module de carte SIM ;
- La Figure 2 présente un block diagramme schématique d'une carte SIM selon un mode de réalisation de l'invention;

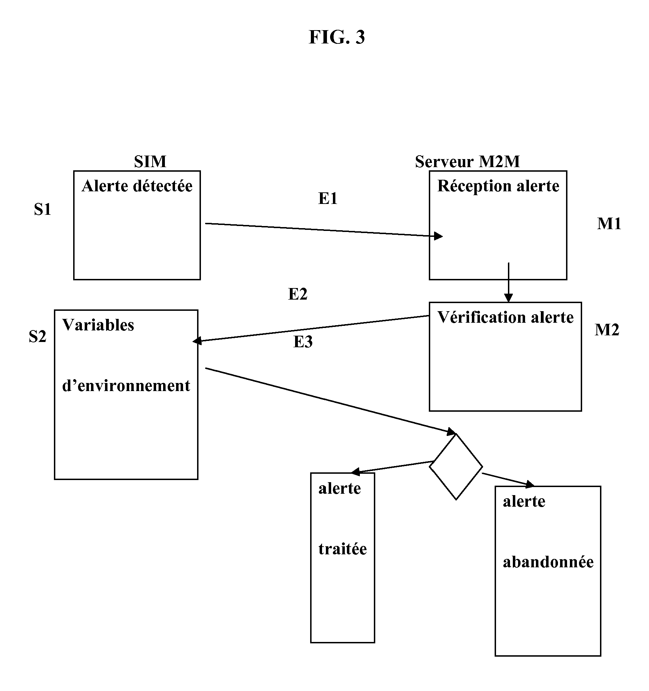

- La Figure 3 représente un possible séquencement des échanges SIM avec un serveur distant en cas d'alerte, et
- La Figure 4 est un bloc-diagramme du contrôleur selon l'invention.

### DESCRIPTION DETAILLEE DE L'INVENTION

Selon l'invention, de manière avantageuse, la carte SIM, par exemple au format 2FF ou 3FF embarque à son bord un contrôleur ou microcontrôleur et au moins un capteur permettant de signaler des alertes.

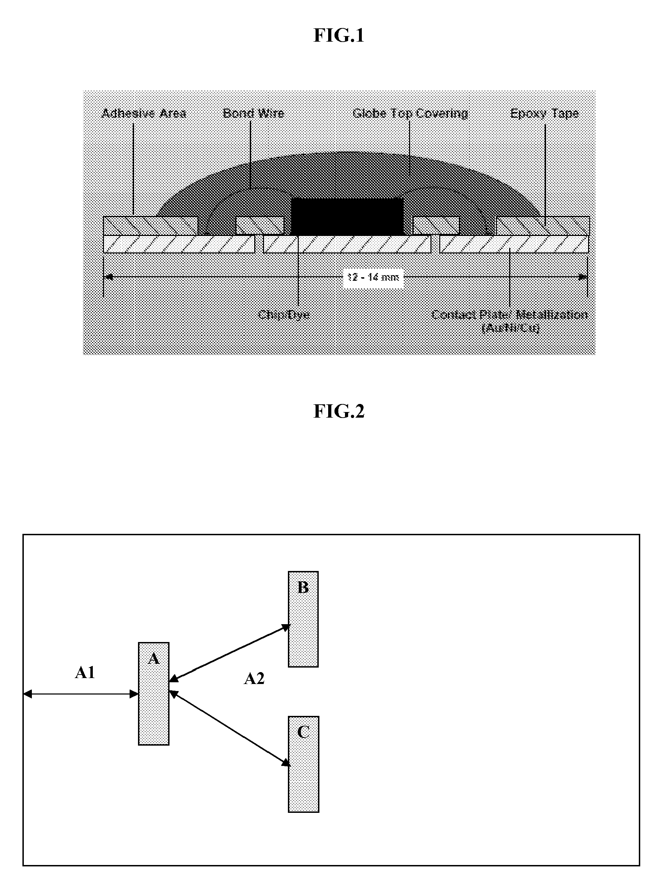

En référence à la Figure 1, la fabrication d'un module d'une carte à puce conventionnelle comprend typiquement d'abord le collage de la puce (ou microcircuit) Chip/Die en disposant sa face active avec ses plots de sortie vers le haut et en collant la face opposée sur une plaque support diélectrique. On effectue ensuite le micro-câblage (ou soudage des connexions) Bond Wire qui consiste à réaliser par des soudures la connexion des plots de sortie de la puce ou microcircuit avec le bornier de contacts à 8 zones de contacts Contact Plate. Enfin, on effectue un enrobage en boîtier Globe Top Covering qui consiste à protéger la puce et les fils de connexion soudés en utilisant une résine.

Selon l'invention, on se propose d'intégrer dans le module de la carte SIM, au moins un élément capteur, ou capteur. Ainsi selon l'invention ce capteur sera intégré au module et ses plots d'interface seront connectés au contrôleur SIM par des interconnexions de préférence internes au module, le bornier 8 contacts SIM étant déjà utilisé par des connections externes standardisées.

En référence à la Figure 2, l'architecture présentée à titre d'exemple, selon un descriptif non limitatif de l'invention comprend :
Un contrôleur de carte à puce conventionnel A qui embarque l'application SIM et qui permet de communiquer avec l'unité de communication (comprenant elle-même des moyens de traitement de signal en bande de base et en radiofréquence) du dispositif M2M via l'une des interfaces A1 (ISO ou USB) définie par la/les Recommandation(s) ISO/ETSI. Cette communication transite via l'un des 8 zones de contact de la carte SIM. Ce contrôleur possède une deuxième interface A2 qui permet de communiquer avec un ou plusieurs capteurs B et C selon l'invention. Cette interface A2 est par exemple de type I2C ou SPI, et est défini au niveau physique par des connections internes au module SIM, ce qui offre la possibilité de connecter plusieurs objets capteur sur le même interface.
Un capteur est par exemple un capteur de température, de pression, de mouvement (par exemple accéléromètre), de choc. Lorsqu'une personne malintentionnée va tenter de voler la carte SIM, l'opération va créer un choc, un mouvement, une pression ... que le capteur utilisé va détecter. Cette information va être transmise au contrôleur A sous la forme d'un signal indicatif d'une valeur d'état d'environnement hors d'une plage prédéterminée, qui va en conséquence bloquer tout ou partie du fonctionnement de la carte SIM, empêchant ainsi une utilisation frauduleuse au moins partielle de cette dernière.

Il peut cependant apparaître que des blocages intempestifs de la carte SIM se produisent en résultat d'une modification de l'environnement, indépendamment de toute opération malintentionnée.

La Figure 2 illustre un autre mode de réalisation pour remédier à ce problème, sous la forme des différentes étapes liées à la détection par la carte SIM d'une perturbation de son environnement.

Initialement en S1, le capteur dans la carte SIM détecte une perturbation de son environnement, perturbation pouvant être, soit de type choc, déplacement intempestif, température anormale, etc. Un signal indicatif d'une valeur d'état d'environnement hors d'une plage prédéterminée est en conséquence envoyé par le capteur vers le contrôleur de la carte SIM. En étape E1, le contrôleur de la carte SIM construit en conséquence un message à destination du serveur de l'application M2M, message qui va être envoyé, via l'unité de communication du dispositif M2M, vers le serveur distant en utilisant des solutions techniques conventionnelles en communication de téléphonie mobile, de type OTA par message de type SMS par exemple.

Les données ainsi envoyées par la carte SIM (son contrôleur) au serveur sont de deux natures :
Des données explicitant l'alerte, par exemple, une température anormale, un choc anormal, et
Des données décrivant l'environnement de la SIM, par exemple, la signature du modem, la pression atmosphérique.

Dans l'étape référencée M1, le serveur reçoit le message d'alerte envoyé par la carte SIM, et le serveur entre alors dans un processus de vérification de confirmation de cette alerte qui consiste a interroger de nouveau la carte SIM de manière a confirmer ou infirmer cette alerte.

Cette interrogation sera transmise par l'échange de l'étape S2 via l'unité de communication du dispositif M2M, vers la carte SIM.

Cette interrogation peut être effectuée plusieurs fois, à un intervalle de temps variable ou pas, en fonction du type de risque qui peut être subi par le dispositif M2M.

Selon l'étape S2, lors de la réception de cette interrogation, la carte SIM fournit un nouvel état des lieux au serveur en fonction des données reçues du capteur qu'elle contient. Ainsi, les données transmises par la carte SIM au serveur lors de l'échange E3 sont :
- Le statut sur l'alerte (maintenue / disparue) ; et
- Les valeurs des variables d'environnement au moment de cette nouvelle interrogation.

En étape M3, après une ou plusieurs étapes répétitives (M2, S2), le serveur entre dans le processus de décision qui lui permet de décider si l'alerte est ignorée ou définitivement validée.

Ainsi dans cette variante, le contrôleur comprend une unité pour construire, en réponse à chacun des signaux successifs indicatifs d'une valeur d'état d'environnement reçu en provenance du capteur, un message à destination d'un serveur distant, l'élément de désactivation désactivant au moins partiellement des fonctions dudit contrôleur en réponse à la réception d'un message de désactivation du serveur distant.

Bien sûr, lorsqu'une interrogation du serveur vers la carte SIM reste sans réponse, l'alerte devient automatiquement valide.

Alternativement, un processus de décision de validation de l'alerte peut être mis en oeuvre par la carte SIM seule. Par exemple, dans le cas d'une carte SIM utilisée dans un équipement M2M inamovible, le fait que cette carte SIM détecte plusieurs fois un mouvement en provenance de l'accéléromètre peut être évaluée par cette carte SIM comme une alerte sérieuse, et de ce fait, le contrôleur dans la carte SIM peut prendre elle même la décision de se bloquer. Ainsi dans ce cas, l'élément de désactivation dans le contrôleur de la carte SIM met en oeuvre un algorithme de désactivation au moins partielle des fonctions dudit contrôleur, ou microcontrôleur, seulement en réponse à une pluralité de signaux successifs indicatifs d'une valeur d'état d'environnement hors d'une plage prédéterminée, afin d'éviter une désactivation erronée par fausse alerte. Ainsi par exemple, l'algorithme comptera le nombre signaux successifs indicatifs d'une valeur d'état d'environnement hors d'une plage prédéterminée dans un intervalle de temps donné, qui déclenchera, dans l'élément de désactivation, la désactivation au moins partielle des fonctions du contrôleur.

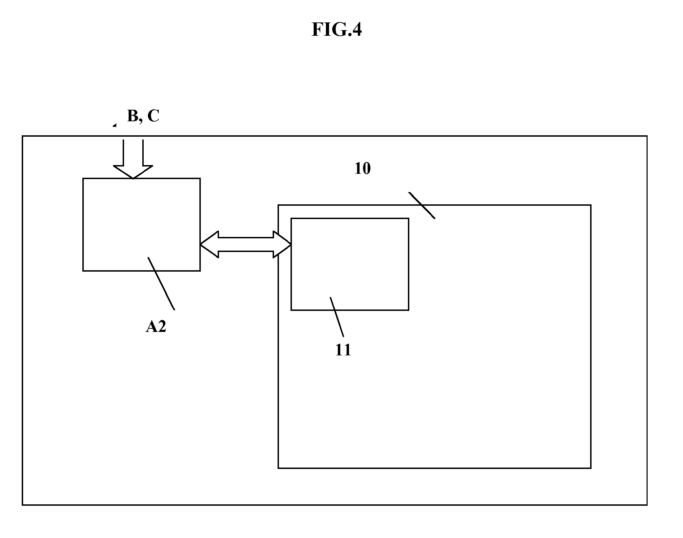

En référence à la figure 4, le contrôleur, ou microcontrôleur de la carte SIM de l'invention comprend une unité de traitement conventionnelle 10 à laquelle est associé, ou dans lequel est inclus, un élément de désactivation, logiciel ou matériel 11. Cet élément de désactivation reçoit, de l'interface A2 avec le capteur B, C, les signaux indicatifs d'une valeur d'état d'environnement générés par le capteur B, C. Alternativement selon l'autre variante de l'invention, cet élément de désactivation reçoit un message de désactivation en provenance du serveur distant.

## Revendications

1. Dispositif M2M comprenant une unité de communication et une carte SIM, ladite carte SIM comprenant un contrôleur ou microcontrôleur (A), **caractérisé en ce que** la carte SIM comprend au moins un capteur (B ; C), ledit au moins un capteur étant un capteur sélectionné parmi le groupe consistant en un capteur de température, un capteur de contrainte, un capteur de mouvement, un capteur de déplacement, un capteur inertiel ou d'accélération, un capteur de son, capteur de pression, un capteur de choc et un capteur de vibration, ledit contrôleur, ou microcontrôleur, (A) comprenant un élément de désactivation au moins partielle de ses fonctions suite à la réception en provenance dudit au moins un capteur (B,C) d'au moins un signal indicatif d'une valeur d'état d'environnement hors d'une plage prédéterminée, évitant ainsi un usage malintentionné de ladite carte SIM.

2. Dispositif M2M conforme à la revendication 1, **caractérisé en ce que** l'élément de désactivation met en oeuvre un algorithme de désactivation au moins partielle des fonctions dudit contrôleur, ou microcontrôleur, (A) en réponse à une pluralité de signaux successifs indicatifs d'une valeur d'état d'environnement hors d'une plage prédéterminée, afin d'éviter une désactivation erronée par fausse alerte.

3. Dispositif M2M conforme à la revendication 2, **caractérisé en ce que** le contrôleur comprend une unité pour construire, en réponse à chacun des signaux successifs indicatifs d'une valeur d'état d'environnement un message à destination d'un serveur distant, ledit élément de désactivation désactivant au moins partiellement des fonctions dudit contrôleur en réponse à la réception d'un message de désactivation du serveur distant.

4. Procédé pour éviter un usage malintentionné d'une carte SIM insérée dans un dispositif M2M par extraction préalable de ladite carte dudit dispositif M2M, ladite carte SIM comprenant un contrôleur ou microcontrôleur, le procédé étant **caractérisé en ce qu'**il comprend - l'utilisation d'au moins un capteur dans la carte SIM, ledit au moins un capteur étant un capteur sélectionné parmi le groupe consistant en un capteur de température, un capteur de contrainte, un capteur de mouvement, un capteur de déplacement, un capteur inertiel ou d'accélération, un capteur de son, capteur de pression, un capteur de choc et un capteur de vibration, ledit contrôleur, ou microcontrôleur, - la mesure par ledit capteur de valeurs d'état d'environnement, et - la désactivation au moins partielle des fonctions dudit contrôleur suite à la réception en provenance dudit au moins un capteur d'au moins un signal indicatif d'une valeur d'état d'environnement hors d'une plage prédéterminée, évitant ainsi un usage malintentionné de ladite carte SIM.
